# EUROPEAN PATENT APPLICATION

(11) **EP 2 597 840 A1**
(43) Date of publication of application: **29.05.2013**
(21) Application number: 11190961.0
(22) Date of filing: 28.11.2011
(51) Int. Cl.: H04L 29/08

(54) **Method, network unit and system for optimizing rendering of media content**

(71) Applicant: Vodafone Holding GmbH, 40213 Düsseldorf (DE)
(72) Inventor: Singh, Rajiv, 40545 Düsseldorf (DE)
(74) Representative: Müller & Schubert

(57) **Abstract**

The present invention relates to a method for optimizing rendering of media content at a mobile device (10, 11) within an application client (12) which communicates with an application server (14) for at least one application. The method is characterized in that a network unit (13), which is interposed between the mobile device (10, 11) running the application client (12) and the application server (14), carries out at least the step of identifying messages of a predetermined application within the communication traffic and the step of analysing at least part of the identified message for information relating to predefined settings, which are related to the rendering of the media content. Furthermore a respective network unit and a respective system are described

## Description

The present invention relates to a method, a network unit and a system for optimizing the rendering of media content at a mobile device.

In modern communication networks, in particular in packet switched networks such as the Internet, it has become popular to access media content such as video files or audio files from a mobile device at a server which is remotely positioned to the mobile device. The connection to the remote server is preferably carried out via the Internet. In order to be able to render the media content at the mobile device, applications are normally provided at the mobile device. These applications may serve as a mere player tool. In some cases it has, however, been proven to be useful to integrate additional functions into the application, such as search functions for searching for respective media content at the remote server.

In addition, it is known to provide media content such as video or audio files in different formats so that the files are adapted to the rendering device and its capabilities, for example screen size.

However, some format settings may be chosen due to the technical features of the rendering device itself or assumed conditions of the network to which the mobile device is connected. Due to such a selection of settings the user may not always be provided with the user experience which they expect.

The problem to be solved by the present invention is thus to provide a solution to allow the user to easily render media content in the best quality possible.

The present invention is based on the finding that this problem can be solved by providing interception means for intercepting an otherwise closed communication stream at an appropriate location within the communication channel.

According to a first aspect of the present invention, this problem is thus solved by a method for optimizing rendering of media content at a mobile device within an application client which communicates with an application server for at least one application. The method is characterized in that a network unit, which is interposed between the mobile device running the application client and the application server, carries out at least the step of identifying messages of a predetermined application within the communication traffic and the step of analysing at least part of the identified message for information relating to predefined settings, which are related to the rendering of the media content.

Media content according to the present invention is in particular digital media content such as video files, audio files, video streams and audio streams. The media content may also be referred to as a media object. Rendering of the media content comprises in particular the display of the content and/or the audio output of the media content. A mobile device according to the present invention may be a cell phone, a PDA (personal digital assistant), a tabletPC, a computer, a laptop or a television. The mobile device is a terminal of a mobile or wireless communications network such as a 3G network or higher, such as UMTS, HSPA. In any case, the mobile communications network according to the present invention is suitable for serving as an access network to a packet switched communications network, such as the Internet. Such networks, which will hereinafter be referred to as the Internet, are well known and the following description will thus only refer to units of such a communication network which are important to the present invention.

The optimizing which is achieved according to the present invention in particular relates to the quality of the rendering of the media content.

The application according to the present invention, which will hereinafter also be referred to as a rendering application, preferably comprises a player function or player application for outputting the media content as well as browser function or browser application for searching for media content at a remote location. The player function or player application, which will hereinafter be referred to as player function, is preferably installed and executed at the mobile device. Also the browser function or browser application, which will hereinafter be referred to as a browser function, is preferably at least partially installed and executed at the mobile device. Parts of the player function and browser function may also be installed and executed at an application server.

The application client is part of the rendering application which is executed at the mobile device and which communicates with the part of the application on the application server. The application client preferably communicates with the application on the application server via an API (application programming interface). The API may be specifically designed for the rendering application.

According to the present invention, the communication channel which is used for the communication between the mobile device and thus the application client installed on the mobile device and the application server is carried out via an access network and the Internet. The access network serves for connecting the mobile device to the Internet. The network unit which is interposed between the mobile device and the application server, is preferably part of the access network, e.g. a 3G wireless communication network, and serves as a mobile-internet gate system. The network unit may thus be a gateway or proxy server. In particular, the network unit or the module which resides thereon may be an HTTP/WAP2 traffic processing component. The term interposed is being used in the present invention to describe the position of the network unit within the communication channel between the mobile unit and the application server.

The method according to the present invention may comprise several steps. At a minimum, the method, however, comprises an identifying and an analysing step. The identifying and/or the analysing step may be carried out by searching for strings or patterns in the messages. The identifying step is preferably being carried out before the analysing step. In the identifying step, messages of a predetermined application within the communication traffic between the mobile device and the application server are being identified. The communication traffic is the traffic which is being transmitted between mobile device and application server. The predetermined application is preferably a rendering application. As messages for a predetermined application are being identified at the network unit only messages relating to the application client and the application server and thus relating to the rendering application, may be retrieved.

In the analysing step, at least part of the thus identified message is analysed for information relating to predefined settings, which are related to the rendering of the media content. The predefined settings which relate to the rendering of the media content may in particular be the resolution and/or a transmission rate or speed. These settings are influenced by several factors, the information on these factors, which is hereinafter also referred to as information, may for example be dependent on the mobile device, the operating system and the application client used thereon, on the connection between the mobile device and the network unit, on the type of media content to be transmitted and so on.

By identifying messages, which relate to the application via which the media content is to be rendered and furthermore by analysing the thus identified message at the network unit, it will be possible to influence the rendering of the media content at a location, which is remote to the mobile device. Thereby, it will be possible to include the current circumstances of the connection of the mobile device to the application server in the selection of settings for rendering. Such a consideration of the actual circumstances is not possible or can only be embodied in a complex way at the mobile device itself. Furthermore, no interaction from the user is mandatory, as the identification and analysing may be carried out automatically at the network unit. As the network unit is separate to the mobile device and, hence, to the application client, it will also not be necessary to amend the application client or mobile device for carrying out the inventive method.

According to a preferred embodiment, the steps of the inventive method, that means at least the indentifying and analysing of messages is being carried out while the communication traffic is being forwarded from the network unit. The term while in this context means that the steps are being carried out after receipt of messages at the network unit and before transmission of the messages from the network unit. As the network unit is interposed between the application server and the mobile device, it will be possible to carry out those steps without significantly delaying the transmission of the message to the mobile device and to the application server, respectively. Furthermore, current conditions may be considered if the steps are carried out during the transmission of the traffic. In addition, messages which can be identified and analysed are not limited to messages sent in one direction between the mobile device and the application server.

The inventive method preferably further comprises the step of changing at least a piece of information relating to the predefined settings. The piece of information that may be changed is a piece of information included in the identified and /or analysed message. Changing the information in particular means replacing a value by a different value. As the information relating to the predefined setting is being used for the rendering or at least for retrieving the media content, changing this information at least partially may have an immediately influence on the quality of rendering. Hence, it will be possible to optimize the rendering by changing information which was originally included in a message by information which will result in an improved quality.

The information relating to predefined settings may be an attribute value of a message element of the identified message. Messages within an application and in particular within a rendering application according to the present invention, in general comprise several message elements, wherein each element serves for a different purpose. Whereas some message elements may serve for routing the message, other message elements may be used to describe the media content which is to be rendered. The message elements normally comprise several attributes which further specify the message element. A message element relating to the media content, may therefore for example comprise attributes relating to the type of media, the size of the media content file, the location where the media content is stored and the format of the media content. Each of these attributes may be assigned a specific value, which may vary from case to case. As such attribute values may be changed at the network unit, it will be possible to adapt the values to values which will result in the best quality of rendering of the media content.

The message, which is identified and analysed at the network unit may be a response from the application server, in particular within the application. The term within the application, in particular means, that the response is sent via the API of the application at the application server. The response from the application server may be a message which represents the results of a search carried out by the browser function. Such a responds message may therefore include information for several media contents. In this case, the response is preferably a list of thumbnails. Each thumbnail provides information on individual media contents. In addition, for each media content different format versions may be included in such a response from the application server.

By identifying, analysing and if appropriate changing information in a response from the application server, the benefits of the present invention can optimally be used. If information on media content is delivered from the application server, it may be changed before it reaches the mobile device. At the mobile device, the application client may then carry out the player function and due to the effected change will automatically render the media content in a high quality.

In addition or alternatively, the message, which is identified and analysed at the network unit, is a request from the application client. The request may be a search request for browsing or searching for media content or may be an actual play request. In such requests, information on the mobile device itself as well as the connection of the mobile device to the application server, in particular the access network, may be included. If such information is changed at the network unit, the application at the application server may then only provide the results for the conditions represented by the changed information. Furthermore, in a request message, which is a play request rather then a search request, also information on the format of the media content is normally included. If this information is changed at the network unit to a format setting of high quality, only the high quality media content will be provided to the mobile device and the rendering at the network unit will thus be improved.

According to a preferred embodiment, the information, which is changed at the network unit, is a format setting of the media content. Such a format setting may be an attribute of a message element. The format setting is preferably correlated to various detail information on the media content. For example, one value of the format setting may be used for a specific average transmission rate of the access network and a specific resolution. By changing the format setting, in particular the attribute value for the format setting, a different resolution may be selected which allows for a high quality rendering of the media content. The user is normally not aware of the different possible values for this attribute. As the change according to the invention is, however, preferably performed at the network unit, such knowledge of the user is not necessary.

According to one embodiment, the method comprises a step of comparing the analysed information with data at the network unit. This comparison step is preferably carried out before the changing step. By comparing the analysed information to data at the network unit, actual conditions as well as preferences of the user may be considered. The data may be stored at the network unit or may be determined at the network unit. If the comparison step delivers the result that the information contained in the message is the same as the data available at the network unit, no change has to be effected and the message may be transmitted in an unchanged fashion. If the information in the message, however, differs from the data at the network unit, the information may be changed and be replaced by the data at the network unit.

Preferably, the data at the network unit is parameters relating to the connection of the mobile device to the application server. In particular, parameters relating to the access network which is being used, may be considered. The data as to which access network is being used, may be inherent at the network unit because of the layout of the access network. If the network unit is for example a server operated by a mobile network provider for serving a mobile or wireless communication network, the network unit will only receive messages from or for a mobile device connected via this specific mobile or wireless communication network. This network may for example be a 3G network. Alternatively, it may, however also be provided at the network unit that for example the type of network or other information on the network, such as the speed, is derived from the communication with the network unit, for example from a message received from or for the mobile device. This data may be a network identification. In addition or alternatively, the data at the network unit may, however, also be the bandwidth which should normally be available within the network. Also the current availability, that means the actual bandwidth may be data which can be used at the network unit.

According to a preferred embodiment, the changes are made based on preset correlations stored at the network unit. If format settings are correlated to the parameters relating to the connection of the mobile device to the application server, the data, which is used at the network unit to effect changes, may be the format setting.

According to a preferred embodiment, the application is a native application to the mobile device. With this kind of applications, the advantages of the present invention can be used. Native applications are designed to run in the environment, that means the machine language and operating system of the device. As these applications are native to a single platform, changes to the application may not or only with a considerable effort be made. As the present invention does not require any changes to be made to the application itself it can be used for native applications and other closed systems.

According to a further aspect, the present invention relates to a network unit for optimizing rendering of media content at a mobile device within an application client which communicates with an application server for at least one application, wherein the network unit has a connection unit for communication connection with the mobile device running the application client and at least one connection unit for communication connection with the application server, at least one module for identifying messages of a predetermined application within the communication traffic and for analysing at least part of the identified message for information relating to predefined settings, which are related to the rendering of the media content and at least one changing unit for changing information in at least one identified message. The network unit is preferably designed to carry out the inventive method. For the different steps of the method different units may be provided. The units may, however, also be combined in one unit. The unit or units may be part of the module of the network unit or may be connected thereto. The units may be hardware and/or software units.

According to another aspect, the present invention relates to a system for optimizing rendering of media content at a mobile device within an application client which communicates with an application server for at least one application, wherein the system comprises a network unit, which is interposed between the mobile device running the application client and the application server, and at least one module at the network unit for identifying messages of a predetermined application within the communication traffic and for analysing at least part of the identified message for information relating to predefined settings, which are related to the rendering of the media content.

The system preferably comprises at least one network unit according to the present invention and is preferably designed to be used for the inventive method.

Features and advantages which are described with respect to the inventive method - where applicable - also relate to the inventive network unit and system and vice versa. The features and advantages are therefore only described once.

The invention will now be described again with reference to a specific use case.

In some mobile devices a proprietary operating system OS is being used. Such operating system may be available for different mobile devices such as mobile phones, tabletPCs. In this OS a player, hereinafter referred to as a rendering application, may be provided which allows for rendering of media content. In addition, the rendering application preferably has a browse and or search function included in the application. This rendering application allows the end-user to browse, search and initiate playback of media content, such as video content, from an application server at a mobile device. The content may be stored on the application server itself or may be stored on a content server which is connected to the application server. The rendering application preferably uses an API to submit queries for media content and to retrieve results from application server. In particular, an API for request and response pairs is provided.

When the application client, which is installed an runs on the mobile device, retries a response to a request, a list of items may be displayed at the mobile device. This list is preferably a list of addresses for media content. The list may thus be referred to as a thumbnail list and may comprise URL or other address indications for media content which was retrieved as a result of the request issued by the mobile device.

If the user of the mobile device selects one of the addresses or thumbnails, the application may change the rendering mode from search mode to player mode. In this mode, the media content relating to the selected address will be rendered at the mobile device. For rendering the media content, the content may be streamed. The streaming and rendering will preferably be carried out by the player application.

The response which will be returned by the API of the application server is a message which contains a list of different versions of one media content, in particular different format variations of the media content. The response will be in an appropriate language such as for example XML. The client application at the mobile device may automatically select from this list before instantiating the player.

The list comprises different elements or objects, which define the different format versions of one media content. These elements may be tags. This tag may comprise different pieces of information. In particular, the address of the media content as well as information about the media content may be included in the tag. The tag may a <media:content> tag.

The additional information which may be included in the tag, other than the mere address for accessing media content may be the type of the media object, the length of the media object and others.

In particular, the information may be information relating to the format of the media object, for example to the video format of a video object. The format may include an RTSP streaming URL for mobile video playback. H.263 video (up to 176x144) and AMR audio, an HTTP URL to the embeddable player (SWF) for this video.

In addition, the format information may include information on the kind of connection, via which the mobile device is connected to the Internet. The following table shows examples of format information which may be included in the tag.

| **xx:format** | **url** | **Type** | **isDefault** |
|---|---|---|---|
| 3 | http://... | video/mp4 | True |
| 2 | http://... | video/3gpp | - |
| 5 | http://... | application/x-shockwave-flash | - |
| 1 | rtsp://... | video/3gpp | - |
| 6 | rtsp://... | video/3gpp | - |
| 8 | http://... | video/mp4 | - |
| 9 | http://... | video/3gpp | - |
| 10 | rtsp://... | video/3gpp | - |

For different media content only some of the above mentioned variations of formats may be available at the application server. This depends on which formats a transcoding has been executed for in the case of the specific video.

More specifically, when a mobile device is attached to a 3G network, the player function of the application may normally select one of the two low quality (video/3gpp) variations corresponding to xx:format=9 or xx:format=2. When the mobile device is attached to a WiFi network, the player function may normally select one of the two high quality (video/mp4) variations corresponding to yt:format=8 or yt:format=3. An example of the command is shown below.

Hence users which are attached via a 3G network would only be able to access the lower quality of the video streams. Even though mobile networks may be protected from congestion and buffering in slow network conditions may be minimized, this approach has certain disadvantages. In particular, even for cases, where the mobile device is attached via a high-speed network, the quality of the video stream will be low. This is in particular crucial for high speed networks which are based on other protocols. For example HSPA (high speed packet access) network protocol is an enhanced version of a 3G mobile telephony communications protocol but allows for UMTS based networks to have higher data transfer speeds and capabilities. A mobile device which is connected to such a network will be considered by the known system to be connected to a 3G network and will thus be provided with the lower quality video stream.

With the present invention in contrast, the user experience can be improved considerably.

In particular, without changing the application for rendering media content itself, the behaviour of the application can be controlled to select a highest or at least a higher quality video which is available for the respective mobile device.

If the changes to the information are effected at the response level of the API, that means after the application server has already selected the versions which are available for the mobile device from which the request stemmed, the inventive method is of particular interest for devices which may be attached via different networks, e.g. WIFI and 3G.

Where the message wherein information is changed is a request from the mobile device, this message may be message which is generated when a user selects one of the thumbnails provided in an earlier response message from the application server. If the message where the information is changed, in contrast is a response of the application server, all information relating to the rendering also for different media contents will preferably be changed at once.

For the information which is to be changed at the network unit, preset replacement values may be stored at the network unit. These values will preferably be stored in context with device types of the mobile devices and operating system information of the operating systems of the mobile devices.

An interface may be provided at the network unit for allowing user input to the module. In particular, preferences for format settings for individual devices and or access networks may be input from the user and stored at or accessed by the network unit.

At the network unit a mapping file may be provided which correlates different format versions of one media content file to combinations of mobile device types and operating systems. This mapping file may be used to select the data which is to be used to change the information in a message.

The changing may also include deleting of information from the message. This is in particular true for messages which are responses from the application server. In these messages normally a list of content file formats are included. As the network unit preferably serves for both transmitting requests and transmitting responses, the network unit will have information on the mobile device type and possibly the operating system on the mobile device which is currently being used. Hence, other versions of the content file for different mobile devices may be deleted from the response message. Thereby, the size of the message can be minimized and thus transmission can be improved.

During the analysing step but at least before the changing step an additional determination step may be performed. In particular, the network unit may determinate the conditions of the mobile network via which the mobile device is connected. In particular, the bandwidth which is available may be determined. This may include determining the current conditions of the mobile network. Alternatively or in addition the supposed bandwidth which can be derived from the nature of the mobile network may be investigated. It may for example be determined that the mobile device is connected via a plain 3G network, with a bandwidth of at least 240Kbps, or that the mobile device is connected via a HSDPA with a bandwidth of at least 450Kbps. From this information on the network, the network unit may derive the appropriate format setting to be used and may change the information in the message accordingly. The bandwidth which is considered in this context is preferably the downstream bandwidth as this will determine the streaming or transmission capability for the media content.

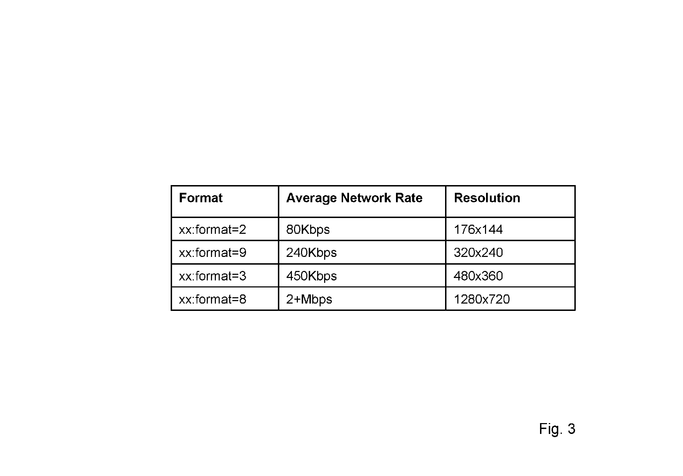

The selection of an appropriate format setting may be made on relations which are for example shown in the attached Figure 3 as a mapping table.

The invention will now be described again with reference to the enclosed figures, wherein:
Figure 1: shows a schematic depiction of an embodiment of the system according to the present invention; and
Figure 2: schematically shows the steps which may be carried out during an embodiment of the inventive method;
Figure 3: shows an embodiment of a table stored at the network unit;
Figure 4: schematically shows part of the communication between the mobile device, the network unit and the application server according to one embodiment of the inventive method; and
Figure 5: schematically shows part of the communication between the mobile device, the network unit and the application server according to a different embodiment of the inventive method.

The depicted embodiment of the system 1 comprises a mobile device in the form of a mobile phone 10 and an additional mobile device in the form of a mobile computer 11. Even though two mobile devices 10, 11 are shown, it is obvious that the system 1 may also only comprise one mobile device or more than two mobile devices.

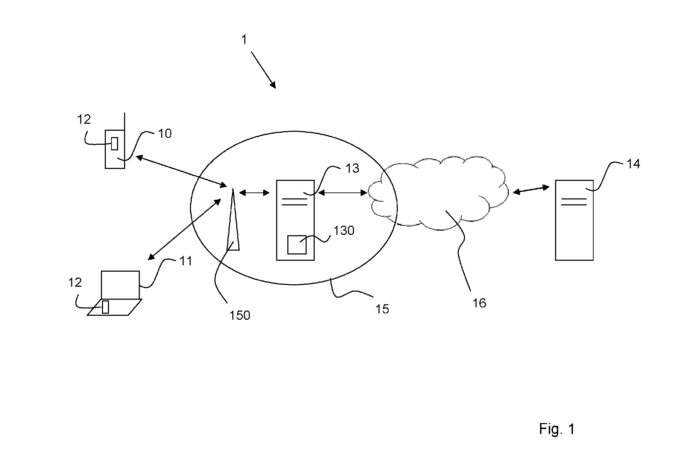

On each of the depicted mobile devices 10, 11 an application client 12 is installed. The application of this application client 12 may be a native application. The mobile devices 10, 11 are connected to a mobile communications network which, serves as an access network 15 in the system 1. This access network 15 comprises a network unit 13, which may be a proxy server of the mobile communications network. The network unit 13 comprises a module 130 for processing communication traffic. Furthermore a base station 150 is shown in Figure 1 through which the communication is transmitted from the mobile device 10, 11 to the network unit 13. It is obvious that several base stations 150 may be included and used in the access network 15. Via the network unit 13 communication may be transmitted via an IP-Network 16, in particular the Internet, to an application server 14.

The application client 12 is preferably a client for a rendering application for rendering media content such as video at the mobile device 10, 11. The player function of the rendering application preferably resides on the mobile device 10, 11. In particular, the player function may be part of the application client 12. In addition, a browser function is included in the rendering application.

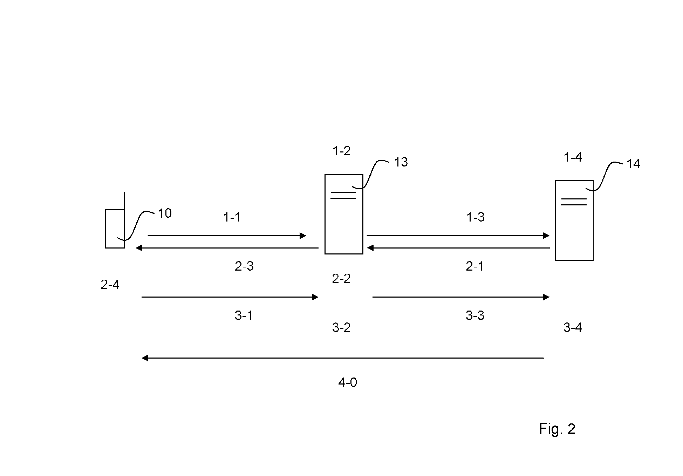

Different embodiments of the inventive method will now be described with respect to Figure 2. The steps may at least partially be carried out by the module 130 on the network unit 13. For sake of simplicity, however, steps carried out at the module 130 will be described hereinafter as being carried out at the network unit 13. The methods will be described with respect to the mobile device 10 but may of course also be carried out with the mobile device 11. The user of a mobile device 10 may start the rendering application and via the application client 12 may enter a search request. This search request will be transmitted via the access network 15 in a first step 1-1 to the network unit 13. In a second step 1-2, the search request may be processed at the network unit 13. Preferably, this processing is a mere transmission of the request. However, data such as information on the mobile device 10 and its operating system may be derived from the request already at step 1-2. The search request is then transmitted in step 1-3 to the application server 14. At the application server 14, the search request may be processed in step 1-4 by conducting a browsing function. If the user entered for example the name of an artist, the result of the browsing function may be a list of titles from this artist. The search or browsing is preferably only carried out within a database which resides on the application server 14 or which is attached to the application server 14. The search request which was sent by the mobile device 10 will be received at the application server via an API of the rendering application or a browsing application for the specific database.

The result list will be transmitted from the application server 14 as a search response message. This response message will be transmitted via the network unit 13 in step 2-1. At the network unit 13, this response message may be identified as a response within the rendering application and may be analysed. In addition, the network unit 13 may determine the connection via which the mobile device 10 is connected to the network unit 13. If this determination shows that the mobile device 10 is connected for example via a 3G network with a sufficient downstream bandwidth of for example 450Kbps, the network unit 13, in particular the module 130, may select the format type 3 as being the highest quality format and may delete the other format versions of the media content, which are also included in the response message. The thus reduced result list may be delivered to the mobile device in step 2-3. Hence, for each title, the mobile device 10 will receive only one format version with the respective address information.

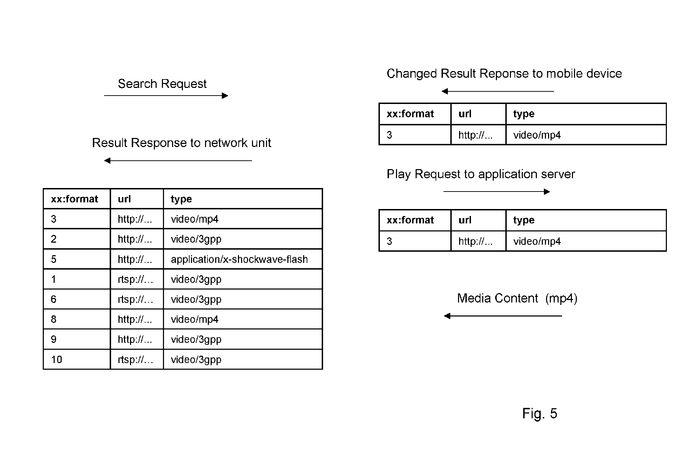

In step 2-4, the user may select a title from the list in the response message. Upon selection of a title, a player function of the rendering application will start. As only one format version with the respective URL is left in the response list, the play request sent in step 3-1 will only include one entry. This is schematically shown in Figure 5. In this embodiment, the network unit 13 does not further process the play request in step 3-2 but merely transmits it to the application server 15 in step 3-3. In step 3-4 the requested media content file at the respective URL will be retrieved and will be made available to the mobile device 10 by streaming or download in step 4-0.

As the format was changed to a higher quality, the user, even though his mobile device 10 is connected via a 3G network will be able to view the requested video at high quality.

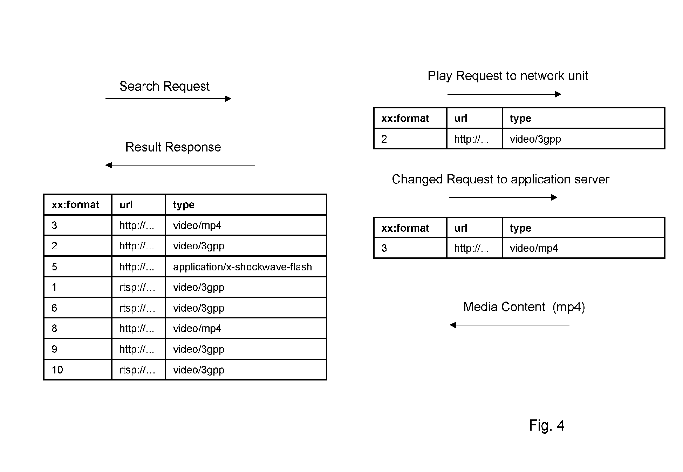

In a different embodiment of the method, part of the communication of which is shown in Figure 4, most of the steps as described above are identical. However, in this embodiment, in step 2-2 no changing of the result list will be carried out at the network unit 13. In this embodiment, the rendering application, in particular the application client 12 at the mobile device 10 will select a format version of a title, once the user selects this title. The selection of the format version will be carried out based on the information of which network is being used to communicate with the application server 15 and in particular with the network unit 13. In the present case, the player function will thus for example select format version 2. This version will be included in the play request, which is transmitted to the network unit 13 in step 3-1. At the network unit 13 in this embodiment, the message of the play request will be identified and analysed at step 3-2. As the network unit will be able to determine that the mobile device 10 is connected via a network with higher bandwidth than a normal 3G network, it will change the format setting to 3 and preferably also change corresponding URL and media type. The thus changed request will be sent to the application server 15 in step 3-3 and the respective media content at high quality

(e.g. mp4) will be made available to the mobile device 10 from the application server 14 in step 4-0. This making available of the media content may also be preformed also via the network unit 13.

### Reference List

- 1: system
- 10: mobile phone (mobile device)
- 11: mobile computer (mobile device)
- 12: application client
- 13: Network unit
- 130: Module
- 14: Application server
- 15: Access network
- 150: Base station
- 16: IP-Network

## Claims

1. Method for optimizing rendering of media content at a mobile device (10, 11) within an application client (12) which communicates with an application server (14) for at least one application, **characterized in that** a network unit (13), which is interposed between the mobile device (10, 11) running the application client (12) and the application server (14), carries out at least the step of identifying messages of a predetermined application within the communication traffic and the step of analysing at least part of the identified message for information relating to predefined settings, which are related to the rendering of the media content.

2. Method according to claim 1, **characterized in that** the steps of the method are being carried out while the communication traffic is being forwarded from the network unit (13).

3. Method according to claim 1 or 2, **characterized in that** the method comprises the step of changing at least piece of information relating to the predefined settings.

4. Method according to anyone of claims 1 to 3, **characterized in that** the information relating to predefined settings is an attribute value of a message element of the message.

5. Method according to anyone of claims 1 to 4, **characterized in that** the message is a response from the application server (14) within the application.

6. Method according to anyone of claims 1 to 5, **characterized in that** the message is a request from the application client (12).

7. Method according to anyone of claims 1 to 6, **characterized in that** the information is a format setting of the media content.

8. Method according to anyone of claims 3 to 7, **characterized in that** the step of changing the information is carried out after comparing the analysed information with data at the network unit (13).

9. Method according to claim 8, **characterized in that** the data is parameters relating to the connection of the mobile device (10, 11) to the application server (14).

10. Method according to anyone of claims 3 to 9, **characterized in that** the changes are made based on preset correlations stored at the network unit (13).

11. Method according to anyone of claims 1 to 10, **characterized in that** the application is a native application to the mobile device (10, 11).

12. Network unit for optimizing rendering of media content at a mobile device (10, 11) within an application client (12) which communicates with an application server (14) for at least one application, wherein the network unit (13) has a connection unit for communication connection with the mobile device (10, 11) running the application client (12) and at least one connection unit for communication connection with the application server (14), at least one module (130) for identifying messages of a predetermined application within the communication traffic and for analysing at least part of the identified message for information relating to predefined settings, which are related to the rendering of the media content and at least one changing unit for changing information in at least one identified message.

13. Network unit according to claim 12, **characterized in that** it is designed to carry out a method according to at least one of the claims 1 to 11.

14. System for optimizing rendering of media content at a mobile device (10, 11) within an application client (12) which communicates with an application server (14) for at least one application, wherein the system (1) comprises a network unit (13), which is interposed between the mobile device (10, 11) running the application client (12) and the application server (14), and at least one module (130) at the network unit (13) for identifying messages of a predetermined application within the communication traffic and for analysing at least part of the identified message for information relating to predefined settings, which are related to the rendering of the media content.

15. System according to 14, **characterized in that** the system comprises at least one network unit according to anyone of the claims 12 or 13.
